# EUROPEAN PATENT APPLICATION

(11) **EP 4 668 163 A1**
(43) Date of publication of application: **24.12.2025**
(21) Application number: 24856588.9
(22) Date of filing: 16.05.2024
(51) Int. Cl.: G06N 3/045, G06N 3/082, G06N 3/0985, G06N 3/063, G06N 5/04

(54) **ELECTRONIC DEVICE AND METHOD FOR CONTROLLING ELECTRONIC DEVICE**

(30) Priority: 23.08.2023 KR 20230110848
(71) Applicant: Samsung Electronics Co., Ltd., Suwon-si, Gyeonggi-do 16677 (KR)
(72) Inventor: KANG, Minyoung, Suwon-si Gyeonggi-do 16677 (KR); UM, Taegeon, Suwon-si Gyeonggi-do 16677 (KR); OH, Byungsoo, Suwon-si Gyeonggi-do 16677 (KR)
(74) Representative: Gulde & Partner
(86) International application number: PCT/KR2024/006633
(87) International publication number: WO 2025/041968

(57) **Abstract**

An electronic device include at least one processor that causes the electronic device to: acquire first throughput information for an inference operation of a first model and second throughput information for a training operation of a second model, identify, based on at least the first throughput information and the second throughput information, a first resource to perform the inference operation of the first model and a second resource to perform the training operation of the second model, allocate the identified first resource as a resource to perform the inference operation of the first model, and allocate the identified second resource as a resource to perform the training operation of the second model, and train, based on the allocated first and second resources, the second model by using the inference result of the first model.

## Description

### [TECHNICAL FIELD]

The present disclosure relates to an electronic device training a second model by using an inference result of a first model and a controlling method of an electronic device, and more particularly, to an electronic device with an improved speed of training the second model and a controlling method of an electronic device.

### [BACKGROUND ART]

In a current artificial intelligence field, a lot of resources and costs are being required to train a large-scale artificial intelligence model. In this situation, there is a need for a method for training an artificial intelligence model which can achieve high performance by using minimum resources and costs.

Conventional training technologies focus on parallelization and training optimization technologies centered on a transformer-based artificial intelligence model. These training technologies are intended for optimization of a specific artificial intelligence model, and there are limitations in applying these technologies to artificial intelligence models of various structures.

A method of training a student model based on the inference result of a teacher model has been recently developed, such as a knowledge distillation method. However, in case of the knowledge distillation method, a bottleneck may occur due to a difference in processing speeds of a the preprocessing operation, an inference operation of the teacher model, and a training operation of the student model. As a result, the training of the student model is slowed down significantly.

### [DISCLOSURE]

### [TECHNICAL SOLUTION]

According to an aspect of the disclosure, an electronic device training a second model by using an inference result of a first model comprises: a memory storing information for the first model and second model and one or more instructions; and at least one processor operatively coupled to the memory and configured to execute the one or more instructions stored in the memory, wherein the one or more instructions, when executed by the at least one processor cause the electronic device to: acquire first throughput information for an inference operation of the first model and second throughput information for a training operation of the second model, identify, based on at least the first throughput information and the second throughput information, a first resource to perform the inference operation of the first model and a second resource to perform the training operation of the second model, allocate the identified first resource as a resource to perform the inference operation of the first model, and allocate the identified second resource as a resource to perform the training operation of the second model, and train, based on the allocated first and second resources, the second model by using the inference result of the first model.

According to an aspect of the disclosure, the one or more instructions, when executed by the at least one processor , cause the electronic device to: identify information for a plurality of resource allocation combinations, acquire, for each of the plurality of resource allocation combinations, the first throughput information for the inference operation of the first model and the second throughput information for the training operation of the second model, identify a resource allocation combination having a highest throughput among the plurality of resource allocation combinations based on the first throughput information and the second throughput information for each of the plurality of resource allocation combinations, and identify the first resource and the second resource based on the identified resource allocation combination.

According to an aspect of the disclosure, the one or more instructions, when executed by the at least one processor, cause the electronic device to: acquire, while training the second model , third throughput information for the inference operation of the first model and fourth throughput information for the training operation of the second model, and re-identify at least one of the first resource to perform the inference operation of the first model or the second resource to perform the training operation of the second model based on a determination that, based on the third and fourth throughput information, an inference speed of the first model is slower than a training speed of the second model by a critical speed or more.

According to an aspect of the disclosure, the one or more instructions, when executed by the at least one processor, cause the electronic device to: based on the determination that the inference speed of the first model is slower than the training speed of the second model by the critical speed or more, determine whether an increase condition to increase the number of the first resources to improve a processing speed of the inference operation of the first model is satisfied, and based on a determination the increase condition is satisfied, re-identify the first resource by increasing the number of the first resources, and based on a determination the increase condition is not satisfied, re-identify the second resource by reducing the number of the second resources.

According to an aspect of the disclosure, the one or more instructions, when executed by the at least one processor, cause the electronic device to: acquire fifth throughput information for a preprocessing operation of data input to the first model and the second model, and based on a determination that at least one of an inference speed of the first model or a training speed of the second model is faster than a preprocessing speed by a critical speed or more, increase, based on the third to fifth throughput information, a number of third resources to perform the preprocessing operation.

According to an aspect of the disclosure, the at least one processor comprises: a graphics processing unit (GPU) configured to perform the inference operation by using the first model or the training operation by using the second model, and a central processing unit (CPU) configured to perform the preprocessing operation, and wherein the one or more instructions, when executed by the at least one processor , cause the device to: increase the number of the third resources to perform the preprocessing operation by connecting a remote CPU in addition to the CPU.

According to an aspect of the disclosure, the one or more instructions, when executed by the at least one processor, cause the electronic device to: acquire, while training the second model, third throughput information for the inference operation of the first model and fourth throughput information for the training operation of the second model, and adjust a parameter included in the second model based on a determination that (i) a training speed of the second model is slower than an inference speed of the first model and (ii) the training speed of the second model is slower than a critical speed based on the third and fourth throughput information.

According to an aspect of the disclosure, the one or more instructions, when executed by the at least one processor, cause the electronic device to: adjust the parameter included in the second model by performing at least one of pruning, freezing, or parameter tuning for the second model.

According to an aspect of the disclosure, the first throughput information comprises at least one of information for a time required per iteration, the number of samples processed per hour, floating-point operations per second (FLOPs), in an inference operation process of the first model, or an amount of data stored in the memory by the inference operation of the first model, and the second throughput information comprises at least one of information for a time required per iteration, the number of samples processed per hour, floating-point operations per second (FLOPs), in the training operation of the second model, or an amount of data stored in the memory by the training operation of the second model.

According to an aspect of the disclosure, a controlling method of an electronic device training a second model by using an inference result of a first model, the method comprising: acquiring first throughput information for an inference operation of the first model and second throughput information for a training operation of the second model; identifying, based on at least the first throughput information and the second throughput information, a first resource to perform the inference operation of the first model and a second resource to perform the training operation of the second model; allocating the identified first resource as a resource to perform the inference operation of the first model, and allocating the identified second resource as a resource to perform the training operation of the second model; and training, based on the allocated first and second resources, the second model by using the inference result of the first model.

According to an aspect of the disclosure, the method further comprises: identifying information for a plurality of resource allocation combinations, wherein in the acquiring the first throughput information for the inference operation of the first model and the second throughput information for the training operation of the second model are acquired for each of the plurality of resource allocation combinations, and the identifying the information for a plurality of resource allocation combinations comprises: identifying a resource allocation combination having a highest throughput among the plurality of resource allocation combinations based on the first throughput information and the second throughput information for each of the plurality of resource allocation combinations, and identifying the first resource and the second resource based on the identified resource allocation combination.

According to an aspect of the disclosure, the method further comprising: acquiring, while training the second model, third throughput information for the inference operation of the first model and fourth throughput information for the training operation of the second model; and re-identifying at least one of the first resource to perform the inference operation of the first model or the second resource to perform the training operation of the second model based on a determination that, based on the third and fourth throughput information, an inference speed of the first model is slower than a training speed of the second model by a critical speed or more.

According to an aspect of the disclosure, the re-identifying comprises: based on the determination that the inference speed of the first model is slower than the training speed of the second model by the critical speed or more, determining whether an increase condition to increase the number of the first resources to improve a processing speed of the inference operation of the first model is satisfied, and based on a determination the increase condition is satisfied, re-identifying the first resource by increasing the number of the first resources, and based on a determination the increase condition is not satisfied, re-identifying the second resource by reducing the number of the second resources.

According to an aspect of the disclosure, the method further comprising: acquiring fifth throughput information for a preprocessing operation of data input to the first model and the second model; and based on a determination that at least one of an inference speed of the first model or a training speed of the second model is faster than a preprocessing speed by a critical speed or more, increasing, based on the third to fifth throughput information, a number of third resources to perform the preprocessing operation.

According to an aspect of the disclosure, the electronic device comprises: a graphics processing unit (GPU) configured to perform the inference operation by using the first model or the training operation by using the second model, and a central processing unit (CPU) configured to perform the preprocessing operation, wherein the increasing the number of the third resources for performing the preprocessing operation further comprises connecting a remote CPU in addition to the CPU.

According to an aspect of the disclosure, an electronic device training a second neural network model based on a first neural network model, the device comprising: a memory storing information for the first neural network model and the second neural network model and one or more instructions, wherein the first neural network model is larger than the second neural network model, wherein the first neural network model is trained on a first amount of data that is larger than a second amount of data used to train the second neural network model; and at least one processor operatively coupled to the memory and configured to execute the one or more instructions stored in the memory, wherein the one or more instructions, when executed by the at least one processor cause the electronic device to: acquire first throughput information for an inference operation of the first neural network model and second throughput information for a training operation of the second neural network model, identify, based on at least the first throughput information and the second throughput information, a first resource to perform the inference operation of the first neural network model and a second resource to perform the training operation of the second neural network model, allocate the identified first resource as a resource to perform the inference operation of the first neural network model, and allocate the identified second resource as a resource to perform the training operation of the second neural network model, and train, based on the allocated first and second resources, the second neural network model by using the inference result of the first neural network model.

According to an aspect of the disclosure, the one or more instructions, when executed by the at least one processor, cause the device to: identify information for a plurality of resource allocation combinations, acquire, for each of the plurality of resource allocation combinations, the first throughput information for the inference operation of the first neural network model and the second throughput information for the training operation of the second neural network model, identify a resource allocation combination having a highest throughput among the plurality of resource allocation combinations based on the first throughput information and the second throughput information for each of the plurality of resource allocation combinations, and identify the first resource and the second resource based on the identified resource allocation combination.

According to an aspect of the disclosure, the one or more instructions, when executed by the at least one processor, cause the device to: acquire, while training the second neural network model, third throughput information for the inference operation of the first neural network model and fourth throughput information for the training operation of the second neural network model, and re-identify at least one of the first resource to perform the inference operation of the first neural network model or the second resource to perform the training operation of the second neural network model based on a determination that, based on the third and fourth throughput information, an inference speed of the first model is slower than a training speed of the second model by a critical speed or more.

According to an aspect of the disclosure, the one or more instructions, when executed by the at least one processor, cause the device to: based on the determination that the inference speed of the first neural network model is slower than the training speed of the second neural network model by the critical speed or more, determine whether an increase condition to increase the number of the first resources to improve a processing speed of the inference operation of the first neural network model is satisfied, and based on a determination the increase condition is satisfied, re-identify the first resource by increasing the number of the first resources, and based on a determination the increase condition is not satisfied, re-identify the second resource by reducing the number of the second resources.

According to an aspect of the disclosure, the one or more instructions, when executed by the at least one processor, cause the device to: acquire fifth throughput information for a preprocessing operation of data input to the first neural network model and the second neural network model, and based on a determination that at least one of an inference speed of the first neural network model or a training speed of the second neural network model is faster than a preprocessing speed by a critical speed or more, increase, based on the third to fifth throughput information, a number of third resources to perform the preprocessing operation.

### [DESCRIPTION OF DRAWINGS]

FIG. 1 is a block diagram illustrating a configuration of an electronic device according to one or more embodiments of the present disclosure;
FIG. 2 is a configuration diagram illustrating a configuration for solving a bottleneck in a second training operation according to one or more embodiments of the present disclosure;
FIG. 3 is a flowchart illustrating static resource allocation based on throughput information according to one or more embodiments of the present disclosure;
FIG. 4 is a flowchart illustrating dynamic resource allocation based on the throughput information according to one or more embodiments of the present disclosure;
FIG. 5 is a flowchart illustrating parameter adjustment based on the throughput information according to one or more embodiments of the present disclosure;
FIG. 6 is a flowchart for explaining the static resource allocation and the dynamic resource allocation based on the throughput information according to one or more embodiments of the present disclosure;
FIG. 7 is a flowchart illustrating the static resource allocation and the parameter adjustment based on the throughput information according to one or more embodiments of the present disclosure;
FIG. 8 is a flowchart for explaining the static resource allocation, the dynamic resource allocation, and the parameter adjustment, based on the throughput information according to one or more embodiments of the present disclosure; and
FIG. 9 is a flowchart illustrating reallocation of resources for performing a preprocessing operation based on the throughput information according to one or more embodiments of the present disclosure.

### [BEST MODE]

The disclosure may be variously modified and have several embodiments, and specific embodiments of the disclosure are thus illustrated in the drawings and described in detail in the detailed description. However, it is to be understood that the scope of the disclosure is not limited to the specific embodiments, and includes various modifications, equivalents and/or alternatives according to the embodiments of the disclosure. Throughout the accompanying drawings, similar components are denoted by similar reference numerals.

In describing the present disclosure, omitted is a detailed description of a case where it is decided that a detailed description of the known functions or configurations related to the present disclosure may unnecessarily obscure the gist of the present disclosure.

In one or more examples, the embodiments described below may be modified in several different forms, and the scope and spirit of the disclosure are not limited to the embodiments. Rather, these embodiments make the disclosure thorough and complete, and are provided to completely deliver the spirit of the disclosure to those skilled in the art.

Terms used in the disclosure are used only to describe the specific embodiments rather than limiting the scope of the disclosure. A term of a singular number used herein is intended to include its plural number unless explicitly indicated otherwise.

In the disclosure, an expression "have", "may have", "include", "may include" or the like, indicates existence of a corresponding feature (for example, a numerical value, a function, an operation, or a component such as a part), and does not exclude existence of an additional feature.

In the present disclosure, an expression "A or B", "at least one of A and/or B", "one or more of A and/or B" or the like, may include all possible combinations of items enumerated together. For example, "A or B", "at least one of A and B" or "at least one of A or B" may indicate all of 1) a case where at least one A is included, 2) a case where at least one B is included, or 3) a case where both of at least one A and at least one B are included.

Expressions "first", "second" and the like, used in the present disclosure, may indicate various components regardless of the sequence and/or importance of the components. These expressions are used only to distinguish one component from another component, and do not limit the corresponding component.

In case that any component (for example, a first component) is mentioned to be "(operatively or communicatively) coupled with/to" or "connected to" another component (for example, a second component), it is to be understood that any component is directly coupled to another component or coupled to another component through still another component (for example, a third component).

On the other hand, in case that any component (for example, the first component) is mentioned to be "directly coupled to" or "directly connected to" another component (for example, the second component), it is to be understood that still another component (for example, the third component) is not present between any component and another component.

An expression "configured (or set) to" used in the disclosure may be replaced by an expression "suitable for", "having the capacity to", "designed to", "adapted to", "made to" or "capable of" based on a situation. The expression "configured (or set) to" may not necessarily indicate "specifically designed to" in hardware.

Instead, an expression "a device configured to" in any situation may indicate that the device may "perform~" together with another device or component. For example, "a processor configured (or set) to perform A, B and C" may indicate a dedicated processor (for example, an embedded processor) that may perform the corresponding operations or a generic-purpose processor (for example, a central processing unit (CPU) or an application processor) that may perform the corresponding operations by executing one or more software programs stored in a memory device.

In the embodiments, a "module" or a "~er/or" may perform at least one function or operation, and be implemented by hardware or software or be implemented by a combination of hardware and software. In one or more examples, a plurality of "modules" or a plurality of "~ers/ors" may be integrated in at least one module and implemented by at least one processor except for a "module" or an "~er/or" that needs to be implemented by specific hardware.

Various elements and regions in the drawings are schematically shown. Therefore, the spirit of the disclosure is not limited by relative sizes or intervals shown in the accompanying drawings.

Hereinafter, the embodiments of the disclosure are described in detail with reference to the accompanying drawings so that those skilled in the art to which the disclosure pertains may easily practice the disclosure.

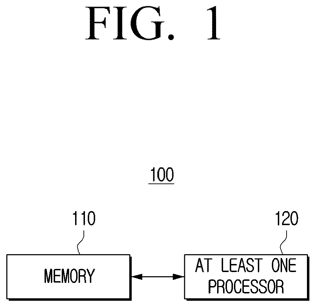

FIG. 1 is a block diagram illustrating a configuration of an electronic device according to one or more embodiments of the present disclosure. As shown in FIG. 1, an electronic device 100 may include a memory 110 and at least one processor 120. As understood by one of ordinary skill in the art, although one processor is illustrated in FIG. 1, the embodiments of the present disclosure may include more than one processor. The configuration of the electronic device 100 shown in FIG. 1 is only an example embodiment, and some configurations may be added thereto based on a type of the electronic device 100.

The electronic device 100 according to one or more embodiments of the present disclosure may be implemented as a server, which is only an example embodiment, and can be implemented as a user terminal such as a smartphone, a tablet personal computer (PC), or a laptop PC, or implemented as various devices such as a smart television (TV), a home appliance device, or an internet of things (IoT) device. In one or more examples, the electronic devices 100 may be implemented as two or more servers in case that the electronic device 100 is implemented as the server.

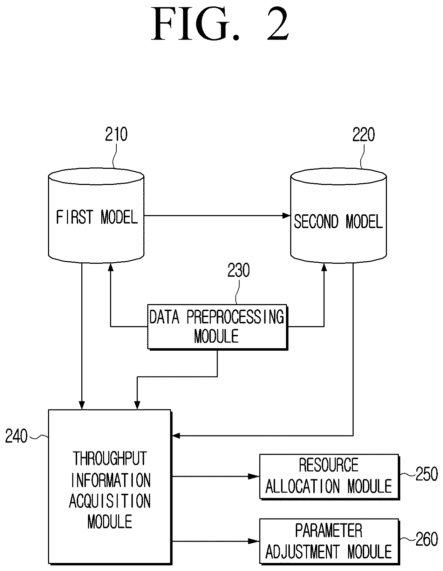

In one or more examples, the memory 110 may store an operating system (OS) for controlling overall operations of the components of the electronic device 100, and instructions or data related to the components of the electronic device 100. In particular, as shown in FIG. 2, the memory 110 may include a data preprocessing module 230, a throughput information acquisition module 240, a resource allocation module 250, and a parameter adjustment module 260 to perform a function of training a second model by using an inference result of a first model. For example, in case that the function of training the second model is executed using the inference result of the first model, the electronic device 100 can load data for various modules for training the second model into a volatile memory by using the inference result of the first model stored in a non-volatile memory. In one or more examples, "loading" may refer to an operation of loading and storing data stored in the non-volatile memory into the volatile memory for at least one processor 120 to access the data.

In one or more examples, as shown in FIG. 2, the memory 110 can store a first model 210 and a second model 220. In one or more examples, the first model 210 or the second model 220 can be a language model such as a speech recognition model or a natural language understanding model, which is only an example embodiment, and can be a neural network model which can perform various operations such as an object recognition operation, a translation operation, and a document summarization operation.

The first model 210 and the second model 220 may be implemented as a teacher-student model, where the student model is trained utilizing knowledge distillation. In one or more examples, knowledge distillation refers to the process of transferring knowledge from a large model (e.g., teacher model) to a smaller model (e.g., student model). This process plays a critical role because the larger knowledge capacity of bigger models may not be utilized to its full potential without the smaller model. For example, even if a model only employs a small percentage of its knowledge capacity, evaluating the large model can be computationally expensive. Accordingly, in one or more examples, knowledge distillation involves a small "student" model learning to mimic a large "teacher" model and using the teacher's knowledge to achieve similar or improved accuracy.

For example, the first model 210 may be the teacher model trained by using a first amount of training data than a second amount of training data used the second model 220 (e.g., student model), and may include more parameters (e.g., layers or weight values) than the second model 220. The second model 220 may be the student model trained using less training data than the first model 210, and can include fewer parameters than the first model 210.

In one or more examples, the second model 220 can be trained through a knowledge distillation method of performing the training by using an inference result of the first model 210. The knowledge distillation method is one of the training methods that allows the student model to achieve high performance similar to the teacher model by delivering a complex knowledge (or the inference result) of the teacher model that has high prediction accuracy to the simple student model to thus train the student model.

In one or more examples, the memory 110 can store input data to be input to the first model 210 and the second model 220 to train the second model 220 by using the inference result of the first model 210.

In one or more examples, the memory 110 may be implemented as the non-volatile memory (e.g., hard disk, solid state drive (SSD), or flash memory), the volatile memory (which may also include a memory in the processor 120), or the like.

At least one processor 120 may control the electronic device 100 based on at least one instruction stored in the memory 110.

In particular, at least one processor 120 may include a plurality of processors. In detail, the plurality of processors may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. One or more processors may each control one of other components of the electronic device or any combination thereof, and perform operations related to communication or data processing. One or more processors may each execute at least one program or instruction stored in the memory. For example, the plurality of processors may perform a method according to one or more embodiments of the present disclosure by executing one or more instructions stored in the memory.

In case that the method according to one or more embodiments of the present disclosure includes a plurality of operations, the plurality of operations may be performed by one processor or may be performed by the plurality of processors. The plurality of processors may perform one or more operations in parallel. For example, a first operation, a second operation, and a third operation may be performed by the method according to one or more embodiments. In this case, the first operation, the second operation, and the third operation may all be performed by a first processor, or the first operation and the second operation may be performed by the first processor (e.g., general-purpose processor), and the third operation may be performed by a second processor (e.g., artificial intelligence-specific processor). For example, a preprocessing operation of the input data to be input to the first model 210 and the second model 220 may be performed by the first processor (e.g., CPU), and an inference operation of the first model 210 and a training operation of the second model 220 may be performed by a second processor (e.g., GPU or NPU).

At least one processor 120 may be implemented as one or more multicore processors including multicores (e.g., homogeneous multicores or heterogeneous multicores). When the at least one processor 120 is implemented as the multicore processor, each of the multicores included in the multicore processor may include an internal memory of the processor such as a cache memory or an on-chip memory, and a common cache shared by the multicores may be included in the multicore processor. In one or more examples, each of the multicores included in the multicore processor (or some of the multicores) may independently read and perform a program instruction for implementing the method according to one or more embodiments of the disclosure, or all (or some) of the multicores may be linked to each other to read and perform the program instruction for implementing the method according to one or more embodiments of the disclosure.

When the method according to one or more embodiments of the present disclosure includes a plurality of operations, the plurality of operations may be performed by one core among the multicores included in the multicore processor, or may be performed by the multicores. For example, the first operation, the second operation, and the third operation may be performed by the method according to one or more embodiments. In this case, the first operation, the second operation, and the third operation may all be performed by a first core included in the multicore processor, or the first operation and the second operation may be performed by the first core included in the multicore processor, and the third operation may be performed by a second core included in the multicore processor.

In the embodiments of the disclosure, the processor may refer to a system-on-chip (SoC) in which one or more processors and other electronic components are integrated to each other, a single core processor, the multicore processor, or the core included in the single core processor or the multicore processor. In one or more examples, the core may be implemented as the CPU, the GPU, the APU, the MIC, the DSP, the NPU, the hardware accelerator, or the machine learning accelerator. However, the embodiments of the disclosure are not limited thereto and may include any processor structure known to one of ordinary skill in the art.

In one or more examples, in a process of training the second model 220, the first processor (e.g., CPU) may perform the data preprocessing, and the second processor (e.g., GPU) may perform the inference operation of the first model 210 and the training operation of the second model 220. For example, it is important to allocate resources of the second processor and adjust a size of the second model 220 because the second processor may also be used in the inference operation of the first model 210 and the training operation of the second model 220 in case of training the second model 220 by using the knowledge distillation method.

According to one or more embodiments of the present disclosure, at least one processor 120 may acquire first throughput information for the inference operation of the first model 210 and second throughput information for the training operation of the second model 220. In one or more examples, the first throughput information may be information related to an inference speed of the first model 210 in case that the first model 210 performs the inference operation, and include at least one of information for a time required per iteration, the number of samples processed per hour, floating-point operations per second (FLOPs) representing a processing power in numbers, in an inference operation process of the first model 210, or an amount of data stored in the memory (or a buffer) by the inference operation of the first model 210. The second throughput information may be information related to a training speed of the second model 220 in case of performing the training operation of the second model 220, and include at least one of information for a time required per iteration, the number of samples processed per hour, floating-point operations per second (FLOPs) representing a processing power in numbers, in a training operation process of the second model 220, or an amount of data stored in the memory (or the buffer) by the training operation of the second model 220.

In one or more examples, the throughput information may be related to a processing speed. For example, a processing speed of the inference operation of the first model 210 may be faster than a processing speed of the training operation of the second model 220. In this case, the time required per iteration in the inference operation of the first model 210 may be shorter than the time required per iteration in the training operation of the second model 220, the number of samples processed per hour in the inference operation of the first model 210 may be greater than the number of samples processed per hour in the training operation of the second model 220, the FLOPs in the inference operation of the first model 210 may be greater than the FLOPs in the training operation of the second model 220, or the amount of data stored in the memory by the inference operation of the first model 210 may be greater than the amount of data stored in the memory by the training operation of the second model 220. However, although throughput information may be related to the processing speed, this configuration is only an example embodiment, and the throughput information may be related to processing performance.

In one or more examples, at least one processor 120 may identify a first resource for performing the inference operation of the first model and a second resource for performing the training operation of the second model based on the first throughput information and the second throughput information. In one or more examples, the resource may include a computing resource for performing various functions such as specific calculations or tasks, and may include, for example, hardware such as a processor or a core included in the processor. That is, at least one processor 120 can acquire information for the type and number of the processor to perform the inference operation of the first model and information for the type and number of the processor to perform the training operation of the second model based on the first throughput information and the second throughput information.

In one or more examples, at least one processor 120 may respectively allocate the identified first resource and the identified second resource as a resource for performing the inference operation of the first model and a resource for performing the training operation of the second model. In one or more examples, an operation of allocating the resources may include an operation of the resources being disposed or driven (or enabled) to perform the inference operation or the training operation.

In one or more examples, at least one processor 120 may train the second model 220 by using the inference result of the first model 210 based on the allocated first and second resources. For example, at least one processor 120 can perform the inference operation of the first model 210 by using the identified first resource. In one or more examples, at least one processor 120 can perform the training operation of the second model 220 by using the allocated second resource. In one or more examples, at least one processor 120 can train the second model by using the knowledge distillation method described above. In one or more examples, the first and second resources may operate in parallel. The first and second resource may be located in a same processor, or in separate processor. In one or more examples, the first and second resources may be remotely located where information from the first resource may be provided to the second resource via a network.

In one or more embodiments, at least one processor 120 may re-identify the resources for the first model 210 and the second model 220 by monitoring the throughput information of the first and second models 210 and 220 while training the second model 220 by using the inference result of the first model 210. For example, at least one processor 120 may acquire third throughput information for the inference operation of the first model 210 and fourth throughput information for the training operation of the second model 220 while training the second model 220 by using the inference result of the first model 210 based on the identified first and second resources. In one or more examples, at least one processor 120 may acquire the third and fourth throughput information by a predetermined cycle, which is only an example embodiment, and may acquire the third and fourth throughput information through another event or condition being satisfied. In one or more examples, at least one processor 120 can identify whether a bottleneck occurs by the first model 210 based on the third and fourth throughput information. In one or more embodiments, at least one processor 120 may identify that the inference speed of the first model 210 is slower than the training speed of the second model 220 by a critical speed or more. When this situation occurs, to solve the bottleneck, at least one processor 120 may re-identify at least one of the first resource for performing the inference operation of the first model 210 or the second resource for performing the training operation of the second model 220. The re-identification of a resource may include changing a resources from a first processor to a second processor as the first resource.

In one or more embodiments, while training the second model 220 by using the inference result of the first model 210, at least one processor 120 can adjust the parameter of the second model 220 to adjust a training amount of the second model 220 by monitoring the throughput information of the first and second models 210 and 220. In one or more examples, the parameter of the second model 220 may be an element included in the second model 220, and may include, for example, its weight value, layer, or the like. In detail, at least one processor 120 can acquire the third throughput information for the inference operation of the first model 210 and the fourth throughput information for the training operation of the second model 220 while training the second model 220 by using the inference result of the first model 210 based on the allocated first and second resources. In one or more examples, at least one processor 120 can identify whether the bottleneck, which slows down the training operation of the second model 220, based on the third and fourth throughput information. For example, at least one processor 120 can adjust the parameter included in the second model in case of identifying that the training speed of the second model 220 is slower than the inference speed of the first model 210 and the training speed of the second model 220 is slower than the critical speed. In one or more examples, at least one processor 120 can adjust the parameter included in the second model by performing at least one of pruning, freezing, or parameter tuning for the second model.

Hereinafter, the disclosure is described in more detail with reference to FIG. 2. As shown in FIG. 2, the electronic device 100 may include the first model 210, the second model 220, the data preprocessing module 230, the throughput information acquisition module 240, the resource allocation module 250, and the parameter adjustment module 260. In one or more examples, at least one of the components shown in FIG. 2 may be included in an external device other than the electronic device 100.

The first model 210 may be the teacher model already trained in advance by using more training data than the second model 220. In one or more examples, the first model 210 may be a larger and more complex neural network model than the second model 220, and acquire the inference result more accurately than the second model 220. In particular, the first model 210 can acquire a result value (or a feature value) for the input data by performing the inference operation through forward propagation.

The second model 220 may be the student model (or student) trained using less training data than the first model 210. In one or more examples, the second model 220 can acquire an inference result having lower accuracy than the first model 210, have lower capacity than the first model, and therefore, acquire the inference result more quickly than the first model. The training operation of the second model 220 can be performed by using the forward propagation and backward propagation. In one or more examples, the second model 220 can be trained by the knowledge distillation method of performing the training based on the inference result of the first model 210.

The data preprocessing module 230 can perform the preprocessing operation on the input data input to the first model 210 and the second model 220. In detail, the data preprocessing module 230 can perform the preprocessing on the input data for the first model 210 and the second model 220 to use the data. For example, the data preprocessing module 230 can remove noise included in the data or preprocess the size and format of the data. In one or more examples, the data preprocessing module 230 can perform the preprocessing operation by the general-purpose processor (e.g., CPU). In one or more examples, the pre-processing module 230 may format data into a format suitable for the model. For example, if the model is a large language model, the pre-processing module 230 may format data into a text string.

The throughput information acquisition module 240 can acquire the throughput information in case that the first model 210 performs the inference operation, the throughput information in case that the second model 220 performs the training operation, and throughput information in case that the data preprocessing module 230 performs the preprocessing operation.

In one or more examples, the throughput information acquisition module 240 can acquire throughput information for initial identification of the resource before training the second model 220 by using the inference operation of the first model 210. For example, the throughput information acquisition module 240 can acquire the throughput information during a predetermined number of iterations by inputting the input data to the pre-trained first and second models 210 and 220. In one or more examples, the throughput information acquisition module 240 may acquire the throughput information during the predetermined number of iterations for the data preprocessing module 230.

In one or more examples, the throughput information acquisition module 240 can acquire the throughput information for the resource re-identification or parameter adjustment of the second model 220 while training the second model 220 by using the inference operation of the first model 210.

In one or more examples, a time required for the data preprocessing operation by the data preprocessing module 230 may be determined based on a size of the input data, and after completing the data preprocessing, the data preprocessing module 230 can load data disposed next and perform the preprocessing again before delivering the data to the first model 210 and the second model 220. For example, performance of the data preprocessing operation can have a very significant impact on the training speed. In one or more examples, the inference result of the first model 210 may be used for training the second model 220, and the inference speed (or inference performance) of the first model 210 can also affect the training speed. In one or more examples, the training operation of the second model 220 may be an operation of updating the weight value of the second model 220 through forward propagation and backward propagation processes. The training operation of the second model 220 may also have a different training speed based on a model structure of the second model 220 and a size of the training data. For example, the second model 220 may have a different model structure than the first model 210, thereby resulting in the different training speed.

A bottleneck, which slows down the training speed of the second model 220, may occur in case that the processing speed of at least one of the data preprocessing operation, the inference operation of the first model 210, or the training operation of the second model 220 becomes too slow. For example, the bottleneck, which slows down the training speed of the second model 220, may occur because a speed of providing the data for training the second model 220 is reduced in case that the inference speed of the first model 210 is significantly slower than the training speed of the second model 220. For another example, the bottleneck, which slows down the training speed of the second model 220, may occur in case that the training speed is reduced to a critical value or less due to the structure of the second model 220 although the maximum resources are allocated to the first and second models 210 and 220. For another example, the bottleneck, which slows down the training speed of the second model 220, may occur in case that a data preprocessing speed is slower than the training speed.

As described above, to solve the various bottlenecks, the electronic device 100 according to one or more embodiments of the present disclosure may include the resource allocation module 250 and the parameter adjustment module 260.

The resource allocation module 250 may identify the resources of the data preprocessing module 230, the first model 210, and the second model 220 from one another by acquiring the throughput information of the data preprocessing module 230, the first model 210, and the second model 220.

In one or more embodiments, the resource allocation module 250 may identify the resources of the first model 210 and the second model 220 based on the throughput information acquired based on the predetermined number of iterations before the training the second model 220. For example, the throughput information may be obtained after the first model 210 has been trained a predetermined number of times.

In one or more examples, the resource allocation module 250 can identify information for a plurality of resource allocation combinations. In one or more examples, the resource allocation combination may be the resource combination allocated in advance for the data preprocessing module 230, the first model 210, and the second model 220. For example, as shown in Table 1 below, the plurality of resource allocation combinations can be stored as specified in Table.

**[Table 1]**

| Resource allocation combination | Data preprocessing module | First model | Second model |
|---|---|---|---|
| First option | CPU; 7 | GPU; 1 | GPU; 2 |
| Second option | CPU;7 | GPU; 2 | GPU; 3 |
| Third option | CPU; 6 | GPU; 1 | GPU; 2 |
| ... | ... | ... | ... |

The numbers (e.g., integers) included in the table above may be the number of the used processors. The resource allocation module 250 may acquire the throughput information for the data preprocessing operation for each of the plurality of resource allocation combinations, the first throughput information for the inference operation of the first model, and the second throughput information for the training operation of the second model. For example, the resource allocation module 250 may acquire 1-1-th throughput information and 2-1-th throughput information for a first resource allocation combination, acquire 1-2-th throughput information and 2-2-th throughput information for a second resource allocation combination, and acquire 1-3-th throughput information and 2-3-th throughput information for a third resource allocation combination. The X-Y-th throughput information may refer to may refer to a processor identifier X and number of used processors Y. The resource allocation module 250 can identify a resource allocation combination having the highest throughput among the plurality of resource allocation combinations based on the throughput information for the preprocessing operation for each of the plurality of resource allocation combinations, the first throughput information, and the second throughput information. For example, the resource allocation module 250 can identify the second resource allocation combination having the highest throughput among the first to third resource allocation combinations described above.

The resource allocation module 250 can identify the resources for the preprocessing operation, the inference operation of the first model 210, and the training operation of the second model 220 based on the identified resource allocation combination. For example, the resource allocation module 250 may identify the resources included in the second the resource allocation combination as the resources for the data preprocessing operation, the inference operation of the first model 210, and the training operation of the second model 220. The resource allocation module 250 can allocate each of the resources identified in the resource allocation combination as the resource for performing the preprocessing operation, the resource for the inference operation of the first model 210, or the resource for the training operation of the second model 220.

In one or more embodiments, the resource allocation module 250 may acquire the third throughput information for the inference operation of the first model 210 and the fourth throughput information for the training operation of the second model 220 while training the second model 220 by using the inference result of the first model 210 based on the allocated first and second resources. In one or more examples, the resource allocation module 250 can identify whether the bottleneck, which slows down the second training speed of the second model, occurs based on the third and fourth throughput information. For example, the resource allocation module 250 can identify whether the bottleneck, which slows down the second training speed, occurs by identifying whether the inference speed of the first model 210 is slower than the training speed of the second model 220 by the critical speed or more. For another example, the resource allocation module 250 can identify whether the bottleneck, which slows down the second training speed, occurs by identifying whether at least one of the inference speed of the first model 210 or the training speed of the second model 220 is the critical speed or slower (e.g., less than or equal to the critical speed).

In case of identifying that the bottleneck occurs, the resource allocation module 250 may re-identify at least one of the first resource for performing the inference operation of the first model 210 or the second resource for performing the training operation of the second model 220. For example, the resource allocation module 250 can identify whether it is possible to increase the number of the first resources to improve the processing speed of the inference operation of the first model 210. For example, the resource allocation module 250 can identify whether an extra GPU exists to increase the number of the first resources. The resource allocation module 250 can re-identify the first resources by increasing the first resources in case of identifying that it is possible to increase the number of the first resources. However, the resource allocation module 250 can re-identify the second resources by reducing the number of the second resources in case of identifying that it is impossible to increase the number of the first resources (e.g., in case of identifying that there is no extra GPU to increase the first resource). In one or more examples, the determining whether it is possible to increase the number of resources may be determined based on determining whether an increase condition is satisfied. The increase condition may specify that a predetermined number of processors are available as a resource.

The resource allocation module 250 can reallocate the re-identified resources respectively to the resource for performing the inference operation of the first model 210 and the resource for performing the training operation of the second model 220.

However, the above-described method is only an example embodiment, and the resource allocation module 250 can increase the number of the first resources and simultaneously decrease the number of the second resources to solve the bottleneck. For example, if processors A, B, and C, are used as the second resource, the processor A may be reallocated as a first resource, thereby increasing the number of first resources and decreasing the number of second resources. In one or more examples, the above-described embodiment describes that the resource re-identified by increasing or decreasing the number of the resources, which is only an example embodiment, and the resource may be re-identified by changing its type or performance.

In one or more examples, the resource allocation module 250 can acquire fifth throughput information for the preprocessing operation of the data input to the first model 210 and the second model 220. In one or more examples, the resource allocation module 250 can adjust the number of third resources for performing the preprocessing operation in case of identifying that at least one of the inference speed of the first model or the training speed of the second model is faster than the preprocessing speed by the critical speed or more based on the third to the fifth throughput information. That is, the resource allocation module 250 can increase the number of the third resources to increase the preprocessing speed. In one or more examples, the resource allocation module 250 can increase the number of the third resources by using the extra CPU among at least one processor 120, which is only an example embodiment, and can connect a remote CPU to thus increase the number of the third resources for performing the preprocessing operation.

The parameter adjustment module 260 can adjust the parameter of the second model 220 based on the throughput information of the first and second models 210 and 220.

The parameter adjustment module 260 can acquire the third throughput information for the inference operation of the first model 210 and the fourth throughput information for the training operation of the second model 220 while training the second model 220 by using the inference result of the first model 210 based on the allocated first and second resources. In one or more examples, the parameter adjustment module 260 can identify whether the bottleneck, which slows down the training speed of the second model 220, occurs by using at least one of the third or fourth throughput information. For example, the parameter adjustment module 260 can identify that the bottleneck occurs in case of identifying that the training speed of the second model 220 is slower than the inference speed of the first model 210 and the training speed of the second model 220 is slower than the critical speed, based on the third and fourth throughput information. For another example, the parameter adjustment module 260 can identify that the bottleneck occurs in case that there is no extra resource for increasing the first and second resources, and the training speed of the second model 220 is slower than the critical speed.

In case of identifying that the bottleneck occurs, the parameter adjustment module 260 can adjust the parameter included in the second model. In one or more examples, the parameter adjustment module 260 can adjust the parameter included in the second model by performing at least one of the pruning, the freezing, or the parameter tuning for the second model. For example, the parameter adjustment module 260 can perform the pruning by reducing a size of the neural network model by adjusting the structure or parameter of the neural network model. In one or more examples, the pruning can reduce complexity of the neural network model and improve computing efficiency by removing a less important weight value among the weight values of the neural network model or connection to the less important weight value. For another example, the parameter adjustment module 260 can perform the freezing of performing the training by fixing some of the parameters of the neural network model.

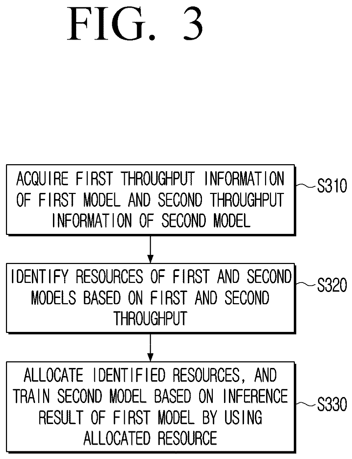

Hereinafter, various embodiments of the present disclosure are described in detail with reference to FIGS. 3 through 9.

FIG. 3 is a flowchart illustrating operations for performing static resource allocation based on the throughput information according to one or more embodiments of the present disclosure. In one or more examples, the static resource allocation may indicate identifying the resources of the first and second models 210 and 220 before training the second model 220.

First, the electronic device 100 may acquire the first throughput information of the first model 210 and the second throughput information of the second model 220 (S310). In detail, the electronic device 100 can identify information for the plurality of resource allocation combinations. For example, the electronic device 100 can identify information for the first resource allocation combination to an N-th resource allocation combination. Each of the plurality of resource allocation combinations can include information for the resource for performing the preprocessing operation, the resource for performing the inference operation of the first model 210, and the resource for performing the training operation of the second model 220.

In one or more examples, the electronic device 100 can acquire the first throughput information for the inference operation of the first model and the second throughput information for the training operation of the second model for each of the plurality of resource allocation combinations. In one or more examples, the electronic device 100 can acquire the first throughput information for each of the plurality of resource allocation combinations by performing the inference operation of the first model for N iterations, and acquire the second throughput information by performing the training operation of the second model for the N iterations.

In one or more examples, the electronic device 100 may identify the resources of the first and second models based on first and second throughput (S320). In one or more examples, the electronic device 100 can identify the resource allocation combination having the highest throughput among the plurality of resource allocation combinations based on the first throughput information and the second throughput information for each of the plurality of resource allocation combinations. In one or more examples, the resource allocation combination having the highest throughput may indicate the resource allocation combination in which the inference speed of the first model 210 and the training speed of the second model 220 are determined to be the fastest compared to other combinations based on the first throughput information and the second throughput information. In one or more examples, according to one or more embodiments, the training speed of the second model 220 may have a greater impact compared to the inference speed of the first model 210. Therefore, the electronic device 100 can identify the resource allocation combination having the highest throughput by giving more weight values to the training speed of the second model 220.

In one or more examples, the electronic device 100 may identify the first resource and the second resource based on the identified resource allocation combination. For example, the electronic device 100 can identify, as the first resource and the second resource, the resource for performing the inference operation of the first model 210 and the resource for performing the training operation of the second model 220, included in the second resource allocation combination, in case of identifying that the second resource allocation combination among the first to N-th resource allocation combinations is the resource allocation combination having the highest throughput.

The electronic device 100 may allocate the identified first and second resources respectively to the resource for performing the inference operation of the first model 210 and the resource for performing the training operation of the second model 220, and train the second model 220 based on the inference result of the first model 210 by using the allocated resource (S330). For example, the electronic device 100 can train the second model 220 based on the inference result of the first model 210 by the knowledge distillation method using the first resource for performing the inference operation of the first model 210 and the second resource for performing the training operation of the second model 220.

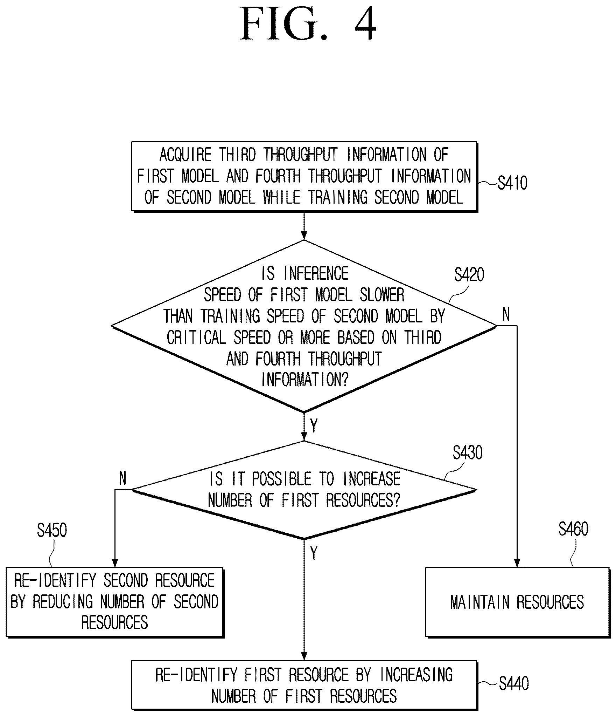

FIG. 4 is a flowchart illustrating operations for performing dynamic resource allocation based on the throughput information according to one or more embodiments of the present disclosure. In one or more examples, the dynamic resource allocation may indicate re-identifying the resources of the first model 210 and the second model 220 while training the second model 220 by using the inference result of the first model 210. In one or more examples, the process illustrated in FIG. 4 is initiated after training of the second model 220 is started.

First, the electronic device 100 can acquire the third throughput information of the first model 210 and the fourth throughput information of the second model 220 while training the second model 220 (S410). In one or more embodiments, the electronic device 100 can acquire the third throughput information of the first model 210 and the fourth throughput information of the second model 220 based on a predetermined cycle (e.g., one hour) while training the second model 220. In one or more embodiments, the electronic device 100 may acquire the third throughput information of the first model 210 and the fourth throughput information of the second model 220 in case that a predetermined event (e.g., an event of receiving a user input for monitoring the throughput information or an event of changing the configuration of the electronic device 100) occurs while training the second model 220. In one or more examples, the predetermined event may specify that the model used as an inference has reached a predetermined state or number of iterations.

The electronic device 100 can identify whether the inference speed of the first model 210 is slower than the training speed of the second model 220 by the critical speed or more based on the third and fourth throughput information (S420). In one or more examples, the critical speed may indicate the speed that can cause the bottleneck, which significantly slows down the training speed of the second model 220, due to a difference between the inference speed of the first model 210 and the training speed of the second model 220.

The electronic device 100 can identify whether it is possible to increase the number of the first resources (S430) in case of identifying that the inference speed of the first model 210 is slower than the training speed of the second model 220 by the critical speed or more (S420-Y). For example, the electronic device 100 can identify whether it is possible to increase the number of the first resources by determining whether the extra resource exists among the artificial intelligence processors (e.g., GPU or NPU). In one or more examples, an increase condition is satisfied when a predetermined number of resources are available to act as a resource.

The electronic device 100 can re-identify the first resource by increasing the number of the first resources (S440) in case of identifying that it is possible to increase the number of the first resources (S430-Y). For example, the electronic device 100 can re-identify the first resource by increasing the number of artificial intelligence processors performing the inference operation of the first model 210 or by increasing the number of the cores included in the artificial intelligence processor. In one or more examples, the electronic device 100 can reallocate the re-identified first resource as the resource for performing the inference operation of the first model 210.

However, the electronic device 100 can re-identify the second resource by reducing the number of the second resources (S450) in case of identifying that it is impossible to increase the number of the first resources (S430-N). The electronic device 100 can re-identify the second resource by reducing the number of artificial intelligence processors performing the training operation of the second model 220 or reducing the number of the cores included in the artificial intelligence processor. In one or more examples, the electronic device 100 can reallocate the re-identified second resource as the resource for performing the training operation of the second model 220. In one or more examples, the electronic device 100 can re-identify the artificial intelligence processor (or core) reduced to perform the training operation of the second model 220 as the resource for performing the inference operation of the first model 210 again.

However, the electronic device 100 can maintain currently allocated resources (S460) in case of identifying that the inference speed of the first model 210 is not slower than the training speed of the second model 220 by the critical speed or more (S420-N).

In one or more examples, the above-described embodiment describes that the electronic device 100 reallocates the resources by identifying that the bottleneck occurs in case that the inference speed of the first model 210 is slower than the training speed of the second model 220 by the critical speed or more, which is only an example embodiment, and can identify that the bottleneck occurs by using another method. For example, the electronic device 100 can identify that the bottleneck occurs in case that a current training speed of the second model 220 is slower than a previous training speed of the second model 220 by the critical speed or more. For another example, the electronic device 100 can identify that the bottleneck occurs in case that the current training speed of the second model 220 is slower than the critical speed.

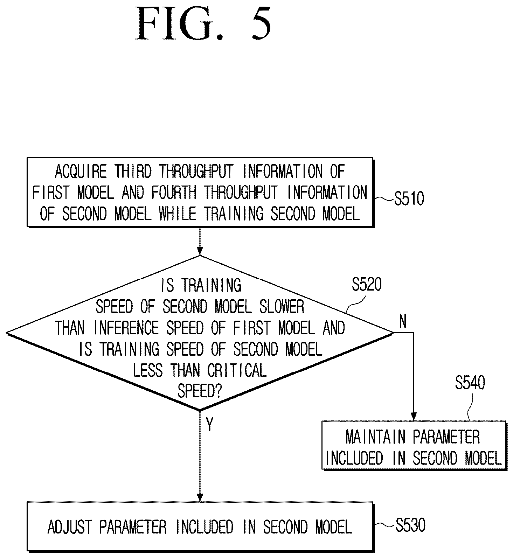

FIG. 5 is a flowchart illustrating operations for performing the parameter adjustment based on the throughput information according to one or more embodiments of the present disclosure.

First, the electronic device 100 can acquire the third throughput information of the first model 210 and the fourth throughput information of the second model 220 while training the second model 220 (S510). In one or more embodiments, the electronic device 100 can acquire the third throughput information of the first model 210 and the fourth throughput information of the second model 220 by the predetermined cycle (e.g., one hour), or through the predetermined event (for example, the event of receiving the user input for monitoring the throughput information, or the event of changing the configuration of the electronic device 100) while training the second model 220.

The electronic device 100 can identify whether the training speed of the second model 220 is slower than the inference speed of the first model 210 and whether the training speed of the second model 220 is slower than the critical speed based on the third and fourth throughput information (S520). In one or more examples, the critical speed may be a speed indicating that the training speed of the second model 220 is significantly decreased and the bottleneck occurs. The critical speed may be a predetermined value set by a user, or determined by a processor for optimizing the training of the second model 220.

The electronic device 100 can adjust the parameter included in the second model (S530) in case of identifying that the training speed of the second model 220 is slower than the inference speed of the first model 210 and the training speed of the second model 220 is slower than the critical speed (S520-Y). In one or more examples, the electronic device 100 can adjust the parameter included in the second model 220 by performing at least one of the pruning, the freezing, or the parameter tuning. Accordingly, the electronic device 100 can increase the speed of the second model 220.

However, the electronic device 100 can maintain the parameter included in the second model 220 (S540) in case of identifying that the training speed of the second model 220 is the inference speed of the first model 210 or more or the training speed of the second model 220 is the critical speed or more (S520-N).

In one or more examples, the above-described embodiment describes that the electronic device 100 adjusts the parameter by identifying that the bottleneck occurs in case that the training speed of the second model 220 is slower than the inference speed of the first model 210 and the training speed of the second model 220 is slower than the critical speed, which is only an example embodiment, and the electronic device 100 can identify that the bottleneck occurs by using another method. For example, the electronic device 100 can identify that the bottleneck occurs in case that the training speed of the second model 220 is slower than the inference speed of the first model 210. For another example, the electronic device 100 can identify that the bottleneck occurs in case that the current training speed of the second model 220 is slower than the critical speed (e.g., less than the critical speed).

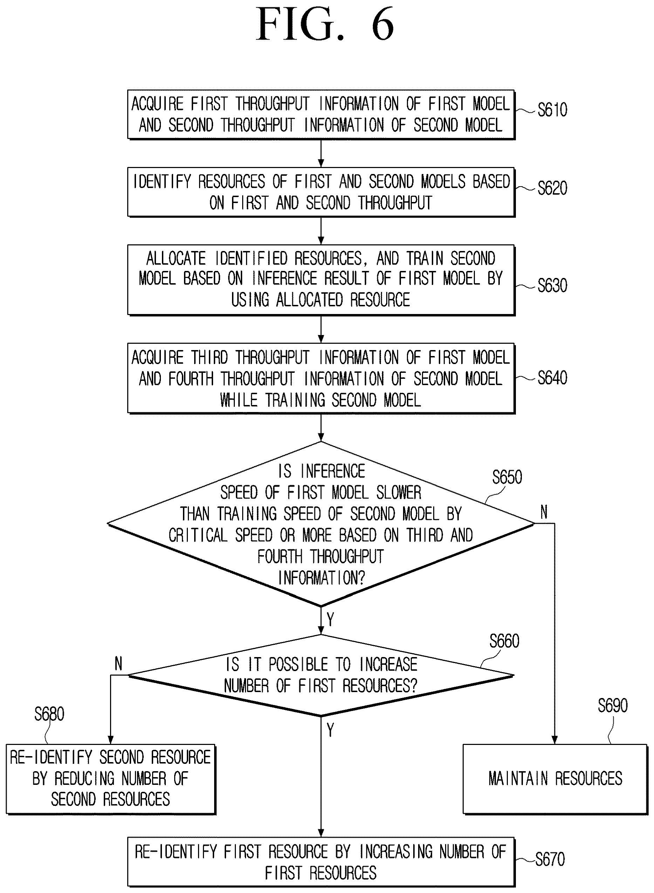

FIG. 6 is a flowchart of operations for performing the static resource allocation and the dynamic resource allocation based on the throughput information according to one or more embodiments of the present disclosure. Steps S610 to S630 disclosed with reference to FIG. 6 are the same as the steps S310 to S330 disclosed with reference to FIG. 3, and the description thus omits redundant descriptions.

The electronic device 100 can acquire the third throughput information of the first model 210 and the fourth throughput information of the second model 220 while training the second model 220 by using the first and second resources identified in the step S620 (S640). In one or more embodiments, the electronic device 100 can acquire the third throughput information of the first model 210 and the fourth throughput information of the second model 220 based on the predetermined cycle (e.g., one hour), or through the predetermined event (e.g., the event of receiving the user input for monitoring the throughput information, or the event of changing the configuration of the electronic device 100) while training the second model 220.

The electronic device 100 can identify whether the inference speed of the first model 210 is slower than the training speed of the second model 220 by the critical speed or more based on the third and fourth throughput information (S650).

The electronic device 100 can identify whether it is possible to increase the number of the first resources (S660) in case of identifying that the inference speed of the first model 210 is slower than the training speed of the second model 220 by the critical speed or more (S650-Y). An increase condition may be used as disclosed above.

The electronic device 100 can re-identify the first resource by increasing the number of the first resources (S670) in case of identifying that it is possible to increase the number of the first resources (S660-Y). However, the electronic device 100 can re-identify the second resource by reducing the number of the second resources (S680) in case of identifying that it is impossible to increase the number of the first resources (S660-N). The electronic device 100 can re-identify the second resource by reducing the number of the artificial intelligence processors performing the training operation of the second model 220 or reducing the number of the cores included in the artificial intelligence processor. In one or more examples, the electronic device 100 can re-identify the artificial intelligence processor (or core) reduced to perform the training operation of the second model 220 as the resource for performing the inference operation of the first model 210 again.

However, the electronic device 100 can maintain the currently allocated resources (S690) in case of identifying that the inference speed of the first model 210 is not slower than the training speed of the second model 220 by the critical speed or more (S650-N).

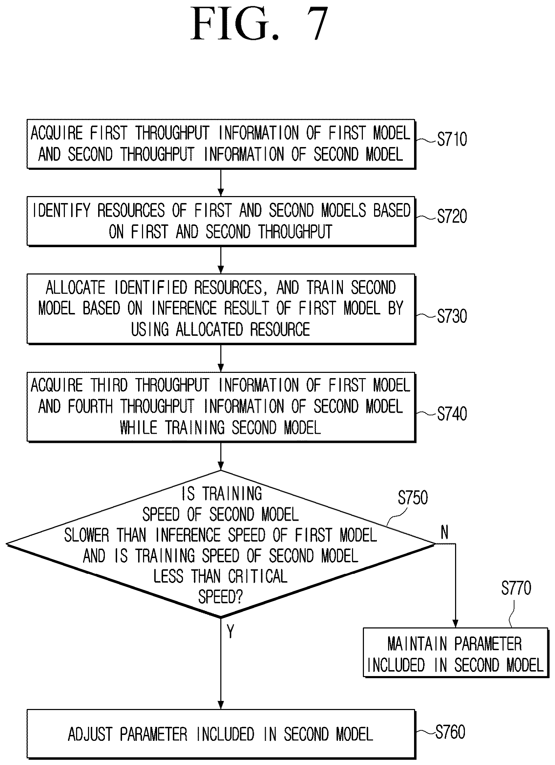

FIG. 7 is a flowchart illustrating operations for performing the static resource allocation and the parameter adjustment based on the throughput information according to one or more embodiments of the present disclosure. Steps S710 to S730 disclosed with reference to FIG. 7 are the same as the steps S310 to S330 disclosed with reference to FIG. 3, and the description thus omits their redundant descriptions.

The electronic device 100 can acquire the third throughput information of the first model 210 and the fourth throughput information of the second model 220 while training the second model 220 by using the first and second resources identified in the step S720 (S740).

The electronic device 100 can identify whether the training speed of the second model 220 is slower than the inference speed of the first model 210 and whether the training speed of the second model 220 is slower than the critical speed based on the third and fourth throughput information (S750).

The electronic device 100 can adjust the parameter included in the second model (S760) in case of identifying that the training speed of the second model 220 is slower than the inference speed of the first model 210 and the training speed of the second model 220 is slower than the critical speed (S750-Y). In one or more examples, the electronic device 100 can adjust the parameter included in the second model 220 by performing at least one of the pruning, the freezing, or the parameter tuning.

However, the electronic device 100 can maintain the parameter included in the second model 220 (S770) in case of identifying that the training speed of the second model 220 is the inference speed of the first model 210 or more or the training speed of the second model 220 is the critical speed or more (S750-N).

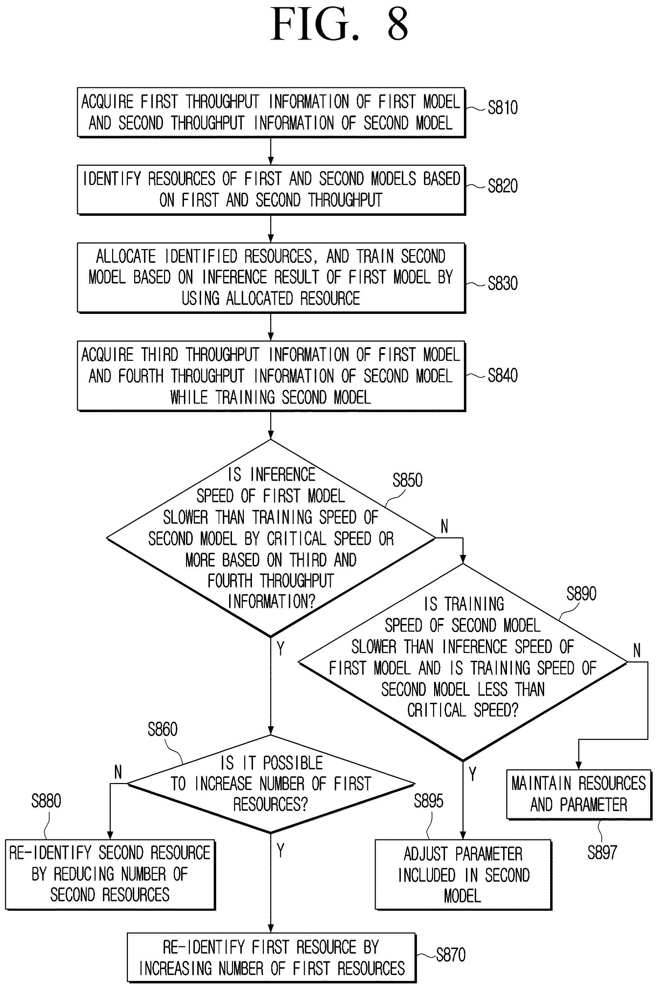

FIG. 8 is a flowchart for explaining the static resource allocation, the dynamic resource allocation, and the parameter adjustment, based on the throughput information according to one or more embodiments of the present disclosure. Steps S810 to S880 disclosed with reference to FIG. 8 are the same as the steps S610 to S680 disclosed with reference to FIG. 6, and the description thus omits their redundant descriptions.

The electronic device 100 can identify whether the training speed of the second model 220 is slower than the inference speed of the first model 210 and whether the training speed of the second model 220 is slower than the critical speed based on the third and fourth throughput information (S890) in case of identifying that the inference speed of the first model 210 is not slower than the training speed of the second model 220 by the critical speed or more (S850-N).

The electronic device 100 can adjust the parameter included in the second model (S895) in case of identifying that the training speed of the second model 220 is slower than the inference speed of the first model 210 and the training speed of the second model 220 is slower than the critical speed (S890-Y). In one or more examples, the electronic device 100 can adjust the parameter included in the second model 220 by performing at least one of the pruning, the freezing, or the parameter tuning.

However, the electronic device 100 can maintain the currently allocated resources and the parameter included in the second model 220 (S897) in case of identifying that the training speed of the second model 220 is the inference speed of the first model 210 or more (e.g., greater than or equal to the inference speed) or the training speed of the second model 220 is the critical speed or more (e.g., greater than or equal to the critical speed) (S890-N).

The above-described embodiment describes that the electronic device 100 reallocates the resources or adjusts the parameter of the second model 220, based on the first model 210 and the training speed of the second model 220, which is only an example embodiment, and the electronic device 100 may identify whether to perform one of the resource reallocation and the parameter adjustment by using another method. For example, the electronic device 100 can identify whether the resources of the first model 210 and the second model 220 are allocated to the maximum in case of identifying that the bottleneck occurs in the second model 220. The electronic device 100 can re-identify the resources for the first model 210 and the second model 220 in case of identifying that the resource of the first model 210 or the second model 220 is not allocated to its maximum. However, the electronic device 100 can perform the parameter adjustment of the second model 220 in case of identifying that the resources of the first model 210 and the second model 220 are allocated to their maximum.

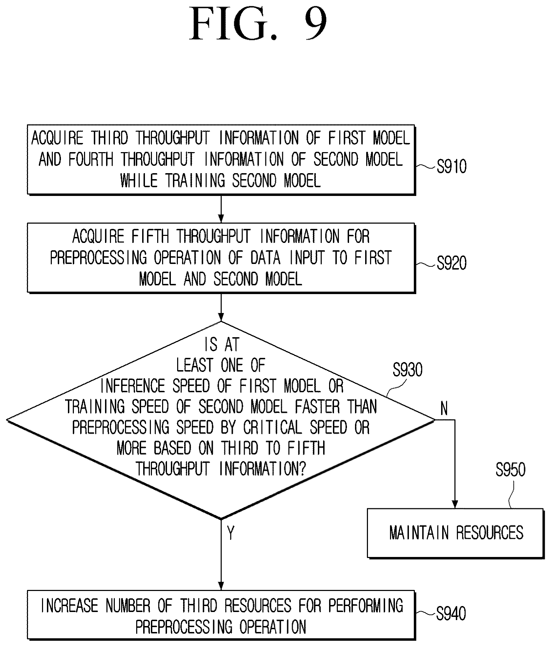

FIG. 9 is a flowchart illustrating operations for performing the re-identification of the resources for performing the preprocessing operation based on the throughput information according to one or more embodiments of the present disclosure.

First, the electronic device 100 can acquire the third throughput information of the first model 210 and the fourth throughput information of the second model 220 while training the second model 220 (S910).

In one or more examples, the electronic device 100 may acquire the fifth throughput information for the preprocessing operation of the data input to the first model 210 and the second model 220 (S920). In one or more examples, the fifth throughput information may include at least one of information for a time required per iteration, the number of samples processed per hour, floating-point operations per second (FLOPs), in a data preprocessing process, or an amount of data stored in the memory by the data preprocessing operation.

The electronic device 100 can identify whether at least one of the inference speed of the first model 210 or the training speed of the second model 220 is faster than the preprocessing speed by the critical speed or more based on the third to fifth throughput information (S930). In one or more examples, the critical speed may be the speed indicating that the training speed of the second model 220 is significantly decreased and the bottleneck occurs.

The electronic device 100 can increase the number of the third resources for performing the preprocessing operation (S940) in case of identifying that at least one of the inference speed of the first model 210 or the training speed of the second model 220 is faster than the preprocessing speed by the critical speed or more (S930-Y). In one or more examples, to perform the preprocessing operation, the electronic device 100 can allocate the extra processor (or core) for the preprocessing operation among the general-purpose processors (e.g., CPU), which is only an example embodiment, and can increase the number of the third resources for performing the preprocessing operation by connecting the remote CPU in addition to the CPU in the electronic device 100.

However, the electronic device 100 can maintain the current resources for the data preprocessing (S950) in case of identifying that at least one of the inference speed of the first model 210 or the training speed of the second model 220 is not faster than the preprocessing speed by the critical speed or more (S930-N).

In one or more examples, a function related to the artificial intelligence according to the present disclosure may be operated by the processor and memory of the electronic device 100.

A processor may include one or more processors. In one or more examples, one or more processors may include at least one of the central processing unit (CPU), the graphic processing unit (GPU), or the neural processing unit (NPU), and are not limited to the examples of the processors described above.

The CPU is the general-purpose processor that can perform not only general computation but also artificial intelligence computation, and efficiently execute a complex program through a multi-layered cache structure. The CPU may be advantageous for a serial processing method that enables organic linkage between a previous calculation result and a next calculation result through sequential calculation. The general-purpose processor is not limited to the above example except for a case where the processor is specified as the above-mentioned CPU.

The GPU is a processor for large-scale computation such as floating-point computation used for graphics processing, and can perform the large-scale computations in parallel by integrating a large number of cores. In particular, the GPU may be advantageous for a parallel processing method such as a convolution computation compared to the CPU. In one or more examples, the GPU may be used as a co-processor supplementing a function of the CPU. The processor for the large-scale computation is not limited to the above example except for a case where the processor is specified as the above-mentioned GPU.

The NPU is a processor specialized in the artificial intelligence computation using the artificial neural network, and each layer included in the artificial neural network can be implemented in hardware (e.g., silicon). In one or more examples, the NPU is specially designed based on requirements of a company, and may thus have a lower degree of freedom than the CPU or the GPU. However, the NPU can efficiently process the artificial intelligence computation required by the company. As the processor specialized for the artificial intelligence computation, the NPU can be implemented in various forms such as a tensor processing unit (TPU), an intelligence processing unit (IPU), and a vision processing unit (VPU). The artificial intelligence processor is not limited to the above example except for a case where the processor is specified as the above-mentioned NPU.

In one or more examples, one or more processors may be implemented in the system-on-chip (SoC). In one or more examples, the SoC may further include the memory and a network interface such as a bus for data communication between the processor and the memory in addition to one or more processors.

The system-on-chip (SoC) included in the electronic device may include the plurality of processors. In this case, the electronic device can perform artificial intelligence calculation (e.g., computation related to the training (or learning) or inference of the artificial intelligence model) by using some of the plurality of processors. For example, the electronic device may perform the artificial intelligence calculation by using at least one of the GPU, NPU, VPU, TPU, or a hardware accelerator that is specialized for the artificial intelligence computation such as convolution calculation or matrix multiplication calculation among the plurality of processors. However, this configuration is only an example, and the electronic device may process the artificial intelligence calculation by using the general-purpose processor such as the CPU.

In one or more examples, the electronic device may perform computation for a function related to the artificial intelligence by using the multicores (e.g., dualcore or quadcore) included in one processor. In particular, the electronic device may perform the artificial intelligence computation such as the convolution computation or the matrix multiplication computation in parallel by using the multicores included in the processor.

One or more processors may control the processing of the input data based on a predefined operation rule or the artificial intelligence model stored in the memory. The predefined operation rule or the artificial intelligence model may be generated by the training.

In one or more examples, being generated by the learning may indicate that the predefined operation rule or artificial intelligence model of a desired feature is generated applying a learning algorithm to a large number of training data. Such learning may be performed by a device itself on which the artificial intelligence is performed according to the disclosure, or by a separate server/system.

The artificial intelligence model can include a plurality of neural network layers. At least one layer may have at least one weight value, and a computation of the layer may be performed through a computation result of a previous layer and at least one defined computation. Examples of the neural network may include a convolutional neural network (CNN), a deep neural network (DNN), a recurrent neural network (RNN), a restricted Boltzmann machine (RBM), a deep belief network (DBN), a bidirectional recurrent deep neural network (BRDNN), a deep Q-network, and a transformer. However, the neural network of the disclosure is not limited to the above examples except for a case where a type of the neural network is specified.

The learning algorithm may be a method of training a predetermined target device (e.g., robot) by using the large number of training data for the predetermined target device to make a decision or a prediction for itself. The learning algorithms may include, for example, a supervised learning algorithm, an unsupervised learning algorithm, a semi-supervised learning algorithm, or a reinforcement learning algorithm. However, the learning algorithm of the disclosure is not limited to the above-described examples, unless specified otherwise.

The method according to the various embodiments of the present disclosure may be provided by being included in a computer program product. The computer program product may be traded as a product between a seller and a purchaser. The computer program product may be distributed in the form of a machine-readable storage medium (for example, a compact disc read only memory (CD-ROM)), or may be distributed online (e.g., downloaded or uploaded) through an application store (e.g., PlayStore^{™}) or directly between two user devices (e.g., smartphones). In case of the online distribution, at least a part of the computer program product (e.g., downloadable app) may be at least temporarily stored or temporarily provided in the machine-readable storage medium such as a server memory of a manufacturer, a server memory of an application store, or a relay server memory.

The method according to the various embodiments of the disclosure may be implemented by software including an instruction stored in the machine-readable storage medium (for example, a computer-readable storage medium). A machine may be a device that invokes the stored instruction from the storage medium and may be operated based on the invoked instruction, and may include the electronic device (e.g., television (TV)) according to the disclosed embodiments.

The machine-readable storage medium may be provided in the form of a non-transitory storage medium. In one or more examples, the "non-transitory storage medium" may refer to a tangible device and only indicate that this storage medium does not include a signal (e.g., electromagnetic wave), and this term does not distinguish a case where data is semi-permanently stored in the storage medium and a case where data is temporarily stored in the storage medium from each other. For example, the "non-transitory storage medium" may include a buffer in which data is temporarily stored.

In case that the instruction is executed by the processor, the processor may directly perform a function corresponding to the instruction or other components may perform the function corresponding to the instruction under the control of the processor. The instruction may include a code provided or executed by a compiler or an interpreter.

Although the embodiments of the present disclosure are shown and described as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic device training a second model by using an inference result of a first model, the electronic device comprising:
a memory storing information for the first model and second model and one or more instructions; and
at least one processor operatively coupled to the memory and configured to execute the one or more instructions stored in the memory,
wherein the one or more instructions, when executed by the at least one processor cause the electronic device to:
acquire first throughput information for an inference operation of the first model and second throughput information for a training operation of the second model,
identify, based on at least the first throughput information and the second throughput information, a first resource to perform the inference operation of the first model and a second resource to perform the training operation of the second model ,
allocate the identified first resource as a resource to perform the inference operation of the first model, and allocate the identified second resource as a resource to perform the training operation of the second model, and
train, based on the allocated first and second resources, the second model by using the inference result of the first model.

2. The electronic device as claimed in claim 1, wherein the one or more instructions, when executed by the at least one processor , cause the electronic device to:
identify information for a plurality of resource allocation combinations,
acquire, for each of the plurality of resource allocation combinations, the first throughput information for the inference operation of the first model and the second throughput information for the training operation of the second model,
identify a resource allocation combination having a highest throughput among the plurality of resource allocation combinations based on the first throughput information and the second throughput information for each of the plurality of resource allocation combinations, and
identify the first resource and the second resource based on the identified resource allocation combination.

3. The electronic device as claimed in claim 1, wherein the one or more instructions, when executed by the at least one processor, cause the electronic device to:
acquire, while training the second model , third throughput information for the inference operation of the first model and fourth throughput information for the training operation of the second model , and
re-identify at least one of the first resource to perform the inference operation of the first model or the second resource to perform the training operation of the second model based on a determination that, based on the third and fourth throughput information, an inference speed of the first model is slower than a training speed of the second model by a critical speed or more.

4. The electronic device as claimed in claim 3, wherein the one or more instructions, when executed by the at least one processor, cause the electronic device to:
based on the determination that the inference speed of the first model is slower than the training speed of the second model by the critical speed or more, determine whether an increase condition to increase the number of the first resources to improve a processing speed of the inference operation of the first model is satisfied, and
based on a determination the increase condition is satisfied, re-identify the first resource by increasing the number of the first resources, and
based on a determination the increase condition is not satisfied, re-identify the second resource by reducing the number of the second resources.

5. The electronic device as claimed in claim 2, wherein the one or more instructions, when executed by the at least one processor, cause the electronic device to:
acquire fifth throughput information for a preprocessing operation of data input to the first model and the second model, and
based on a determination that at least one of an inference speed of the first model or a training speed of the second model is faster than a preprocessing speed by a critical speed or more, increase, based on the third to fifth throughput information, a number of third resources to perform the preprocessing operation.

6. The electronic device as claimed in claim 5, wherein the at least one processor comprises:
a graphics processing unit (GPU) configured to perform the inference operation by using the first model or the training operation by using the second model, and
a central processing unit (CPU) configured to perform the preprocessing operation, and
wherein the one or more instructions, when executed by the at least one processor , cause the device to: increase the number of the third resources to perform the preprocessing operation by connecting a remote CPU in addition to the CPU.

7. The electronic device as claimed in claim 1, wherein the one or more instructions, when executed by the at least one processor, cause the electronic device to: acquire, while training the second model, third throughput information for the inference operation of the first model and fourth throughput information for the training operation of the second model , and
adjust a parameter included in the second model based on a determination that (i) a training speed of the second model is slower than an inference speed of the first model and (ii) the training speed of the second model is slower than a critical speed based on the third and fourth throughput information.

8. The electronic device as claimed in claim 7, wherein the one or more instructions, when executed by the at least one processor, cause the electronic device to: adjust the parameter included in the second model by performing at least one of pruning, freezing, or parameter tuning for the second model.

9. The electronic device as claimed in claim 1, wherein the first throughput information comprises at least one of information for a time required per iteration, the number of samples processed per hour, floating-point operations per second (FLOPs), in an inference operation process of the first model, or an amount of data stored in the memory by the inference operation of the first model, and
the second throughput information comprises at least one of information for a time required per iteration, the number of samples processed per hour, floating-point operations per second (FLOPs), in the training operation of the second model, or an amount of data stored in the memory by the training operation of the second model.

10. A controlling method of an electronic device training a second model by using an inference result of a first model, the method comprising:
acquiring first throughput information for an inference operation of the first model and second throughput information for a training operation of the second model;
identifying, based on at least the first throughput information and the second throughput information, a first resource to perform the inference operation of the first model and a second resource to perform the training operation of the second model;
allocating the identified first resource as a resource to perform the inference operation of the first model, and allocating the identified second resource as a resource to perform the training operation of the second model; and
training, based on the allocated first and second resources, the second model by using the inference result of the first model.

11. The method as claimed in claim 10, further comprising:
identifying information for a plurality of resource allocation combinations,
wherein in the acquiring the first throughput information for the inference operation of the first model and the second throughput information for the training operation of the second model are acquired for each of the plurality of resource allocation combinations, and
the identifying the information for a plurality of resource allocation combinations comprises:
identifying a resource allocation combination having a highest throughput among the plurality of resource allocation combinations based on the first throughput information and the second throughput information for each of the plurality of resource allocation combinations, and
identifying the first resource and the second resource based on the identified resource allocation combination.

12. The method as claimed in claim 10, further comprising:
acquiring, while training the second model, third throughput information for the inference operation of the first model and fourth throughput information for the training operation of the second model; and
re-identifying at least one of the first resource to perform the inference operation of the first model or the second resource to perform the training operation of the second model based on a determination that, based on the third and fourth throughput information, an inference speed of the first model is slower than a training speed of the second model by a critical speed or more.

13. The method as claimed in claim 12, wherein the re-identifying comprises:
based on the determination that the inference speed of the first model is slower than the training speed of the second model by the critical speed or more, determining whether an increase condition to increase the number of the first resources to improve a processing speed of the inference operation of the first model is satisfied, and
based on a determination the increase condition is satisfied, re-identifying the first resource by increasing the number of the first resources, and
based on a determination the increase condition is not satisfied, re-identifying the second resource by reducing the number of the second resources.

14. The method as claimed in claim 11, further comprising:
acquiring fifth throughput information for a preprocessing operation of data input to the first model and the second model; and
based on a determination that at least one of an inference speed of the first model or a training speed of the second model is faster than a preprocessing speed by a critical speed or more, increasing, based on the third to fifth throughput information, a number of third resources to perform the preprocessing operation.

15. The method as claimed in claim 14, in which the electronic device comprises:
a graphics processing unit (GPU) configured to perform the inference operation by using the first model or the training operation by using the second model, and
a central processing unit (CPU) configured to perform the preprocessing operation,
wherein the increasing the number of the third resources for performing the preprocessing operation further comprises connecting a remote CPU in addition to the CPU.
